(19) Europäisches Patentamt
European Patent Office
Office européen des brevets

(11) **EP 4 055 102 B1**

(12) **EUROPEAN PATENT SPECIFICATION**

(45) Date of publication and mention
of the grant of the patent:
**06.12.2023  Bulletin 2023/49**

(21) Application number: **20707107.7**

(22) Date of filing: **02.03.2020**

(51) International Patent Classification (IPC):
**C08L 23/12** *(2006.01)*

(52) Cooperative Patent Classification (CPC):
(C-Sets available)
**C08L 23/12;** C08L 2205/035; C08L 2205/08;
C08L 2207/20                                    (Cont.)

(86) International application number:
**PCT/EP2020/055425**

(87) International publication number:
**WO 2021/089193 (14.05.2021 Gazette 2021/19)**

(54) **UPGRADED RECYCLED POLYOLEFIN**

VEREDELTES RECYCELTES POLYOLEFIN

POLYOLÉFINE RECYCLÉ VALORISÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.11.2019  EP 19207479**

(43) Date of publication of application:
**14.09.2022  Bulletin 2022/37**

(73) Proprietor: **Borealis AG**
**1020 Vienna (AT)**

(72) Inventors:
• **KAHLEN, Susanne**
  **4021 Linz (AT)**
• **BRAUN, Hermann**
  **4021 Linz (AT)**
• **LIU, Yi**
  **4021 Linz (AT)**
• **ALBRECHT, Andreas**
  **4021 Linz (AT)**
• **HUBNER, Gerhard**
  **4021 Linz (AT)**

(74) Representative: **Maiwald GmbH**
**Elisenhof**
**Elisenstraße 3**
**80335 München (DE)**

(56) References cited:
**EP-A1- 3 165 473          WO-A1-2007/071494**
**WO-A1-2019/045833**

(52) Cooperative Patent Classification (CPC): (Cont.)

C-Sets
**C08L 23/12, C08L 23/04, C08L 51/06, C08L 93/00,
C08K 5/09;
C08L 23/12, C08L 23/04, C08L 77/00, C08L 51/06;
C08L 23/12, C08L 23/06, C08L 51/06, C08L 93/00,
C08K 5/09;
C08L 23/12, C08L 23/06, C08L 77/00, C08L 51/06**

C-Sets

## Description

### Field of Invention

The present invention relates to upgraded recycled polyolefin composition, and to a process for obtaining such upgraded recycled polyolefin compositions.

### Background

Polyolefins, in particular polyethylene and polypropylene are increasingly consumed in large amounts in a wide range of applications, including packaging for food and other goods, fibres, automotive components, and a great variety of manufactured articles.

Polyethylene based materials are a particular problem as these materials are extensively used in packaging. Taking into account the huge amount of waste collected compared to the amount of waste recycled back into the stream, there is still a great potential for intelligent reuse of plastic waste streams and for mechanical recycling of plastic wastes.

Generally, recycled quantities of polypropylene on the market are mixtures of both polypropylene (PP) and polyethylene (PE), this is especially true for post-consumer waste streams. Moreover, commercial recyclates from post-consumer waste sources are conventionally cross-contaminated with non-polyolefin materials such as polyethylene terephthalate, polyamide, polystyrene or non-polymeric substances like wood, paper, glass or aluminium. These cross-contaminations drastically limit final applications or recycling streams such that no profitable final uses remain. Fortelny et al have suggested combined EPDM-SBS compatibilizers on the basis of model systems including 10 wt.-% PS. In another study, R. M. C. Santana and S. Manrich have suggested the use of copolymer poly(styrene-b-ethylene-co-butylene-b-styrene) (SEBS) as compatibilizer for blends of PP and IPS in weight ratios of up to 6:1. They found SEBS reduces the diameter of HIPS dispersed particles and a concentration of 5 wt.-% of SEBS was found to be beneficial. S. E. Luzuriaga, J. Kovarova, and I.

Fortelny studied the effect of SEBS/EPR compatibilizers at PE/PP/PS/HIPS systems.

It is further known from A.A. Dewole that graft copolymers of polypropylene and polystyrene (PP-g-PS) have limited impact resistance and require rubber toughening agents such as EPR or styrene-b-ethylene-alt-butylene-b-styrene (SEBS) triblock copolymer, in a downstream compounding operation. G. Radonjic, V. Musil and I. Smit further found compatibilizing effects of the triblock copolymer poly(styrene-b-butadiene-b-styrene) (SBS) on the morphology and mechanical properties of polypropylene/polystyrene (PP/PS) blends. In yet a further study N. Equiza, W. Yave, R. Quijada, M. Yazdani-Pedram have dealt with compatibilization of PE/PP/PS/HIPS blends by use of SEBS/EPR compatibilizers.

EP3165473 refers to PP/PE blends comprising recycled polyolefins and a heterophasic propylene copolymer as compatibilizer having a good balance of stiffness and impact properties.

Previously employed compatibilizers have addressed the impact strength of recyclates, but had to be used in amounts leading to a reduction of stiffness. The present invention at least in part addresses these and related objects.

### Summary of the Invention

The present invention is based on the finding that recycling blend comprising low amounts of polyamide-6, such as 0.5 to 4.0 wt.-%, can be upgraded surprisingly well by blending 0.3 to 4.0 wt.-% of a maleic anhydride-grafted styrene ethylene butylene styrene (SEBS) block copolymer having a melt volume rate (ISO 1133, 5.0 kg, 230°C) of 10 to 40 cm$^3$/10min and a maleic anhydride content of 0.5 to 15.0 wt.-% as determined by FT-IR spectroscopy.

The present invention insofar provides
a polyolefin composition obtainable by blending

a) 96.0 to 99.7 wt.-% based on the overall weight of the polyolefin composition of a blend (A) comprising

A-1) a content of isotactic polypropylene homopolymer of 30 to 70 wt.-%,
A-2) a content of polyethylene and ethylene containing copolymers of 20 to 50 wt.-%,
A-3) 0.5 to 4.0 wt.-% polyamide-6,
A-4) 0 to 3.0 wt.-% of stabilizers
A-5) 0 to 5.0 wt.-% of polystyrene,
A-6) 0 to 3.0 wt.-% talc,
A-7) 0 to 3.0 wt.-% chalk,
A-8) 0 to 1.0 wt.-% paper,
A-9) 0 to 1.0 wt.-% wood,

A-10) 0 to 0.5 wt.-% metal,
A-11) 1 ppm to 100 ppm of limonene as determined by using solid phase microextraction (HS-SPME-GC-MS), and
A-12) 1 ppm to 200 ppm total fatty acid content as determined by using solid phase microextraction (HS-SPME-GC-MS)
wherein amounts of A-1) to A-12) are given with respect to the total weight of blend (A),

wherein blend (A) is a recycled material, which is recovered from a waste plastic material derived from post-consumer and/or post-industrial waste; and wherein blend (A) has a melt flow rate (ISO 1133, 2.16 kg, 230°C) of 4.0 to 20.0 g/10min;
and
b) 0.3 to 4.0 wt.-% based on the overall weight of the polyolefin composition of a compatibilizer (B)

being a maleic anhydride-grafted styrene ethylene butylene styrene (SEBS) block copolymer having
a melt volume rate (ISO 1133, 5.0 kg, 230°C) of 10 to 40 cm$^3$/10min and a maleic anhydride content of 0.5 to 15.0 wt.-% as determined by FT-IR spectroscopy,
whereby the polyolefin composition has a tensile modulus of from 830 to 1200 MPa (ISO 527-1,2) when measured on an injection molded test specimen.

The present invention is further directed to an article comprising the polyolefin composition according to the present invention.
In a further aspect, the present invention is concerned with a process for providing a polyolefin composition according to the present invention, the process comprising the steps of:

a) providing the blend (A) in an amount of 96.0 to 99.7 wt.-%, based on the overall weight of the polyolefin composition
b) providing the compatibilizer (B) in an amount of 0.3 to 4.0 wt.-%, based on the overall weight of the polyolefin composition
c) melting and mixing blend (A) and the compatibilizer (B) in an extruder, and
d) optionally pelletizing the obtained polyolefin composition

In yet a further aspect, the present invention concerns the use of a compatibilizer (B) being a maleic anhydride-grafted styrene ethylene butylene styrene (SEBS) block copolymer having

i) a melt volume rate (ISO 1133, 5.0 kg, 230°C) of 10 to 40 cm$^3$/10min,
ii) a maleic anhydride content of 0.5 to 15.0 wt.-% as determined by FT-IR spectroscopy,

for blending with a blend (A) comprising

A-1) a content of isotactic polypropylene homopolymer of 30 to 70 wt.-%,
A-2) a content of polyethylene and ethylene containing copolymers of 20 to 50 wt.-%, and
A-3) 0.5 to 4.0 wt.-% polyamide-6,
A-4) 0 to 3.0 wt.-% of stabilizers
A-5) 0 to 5.0 wt.-% of polystyrene,
A-6) 0 to 3.0 wt.-% talc,
A-7) 0 to 3.0 wt.-% chalk,
A-8) 0 to 1.0 wt.-% paper,
A-9) 0 to 1.0 wt.-% wood,
A-10) 0 to 0.5 wt.-% metal,
A-11) 1 ppm to 100 ppm of limonene as determined by using solid phase microextraction (HS-SPME-GC-MS), and
A-12) 1 ppm to 200 ppm total fatty acid content as determined by using solid phase microextraction (HS-SPME-GC-MS)
wherein amounts of A-1) to A-12) are given with respect to the total weight of blend (A),

wherein blend (A) is a recycled material, which is recovered from a waste plastic material derived from post-consumer and/or post-industrial waste; and wherein blend (A) has a melt flow rate (ISO 1133, 2.16 kg, 230°C) of 4 to 20 g/10min to obtain an upgraded polyolefin composition having a
tensile modulus of from 830 to 1200 MPa (ISO 527-1,2) when measured on an injection molded test specimen and an improved impact-stiffness balance.

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a," "an," and the like refers to one or more.

For the purposes of the present description and of the subsequent claims, the term "recycled waste" is used to indicate a material recovered from both post-consumer waste and industrial waste, as opposed to virgin polymers. Post-consumer waste refers to objects having completed at least a first use cycle (or life cycle), i.e. having already served their first purpose; while industrial waste refers to manufacturing scrap, which does not normally reach a consumer.

The term "virgin" denotes the newly produced materials and/or objects prior to their first use, which have not already been recycled.

Many different kinds of polyethylene or polypropylene can be present in "recycled waste". Blend (A) according to the present invention includes at least a polypropylene homopolymer, polyethylene, polyamide-6, limonene and fatty acids.

Blend (A) is further characterized by a content of isotactic polypropylene homopolymer of 30 to 70 wt.-%. The content of isotactic polypropylene homopolymer may easily be determined by FT-IR spectroscopy as described herein.

Blend (A) is further characterized by a content of polyethylene and ethylene containing copolymers of 20 - 50 wt.-%. Polyethylene denotes any of the conventional polyethylenes such as LDPE, LLDPE, MDPE, and HDPE.

Ethylene containing copolymers are extremely widespread and may include for example ethylene propylene copolymers such as ethylene propylene rubber, plastomers such as $C_2C_8$ rubbers, and countless other polymers including ethylene-derived units.

The amount of polyamide-6 quoted is furthermore a realistic measurement of the total amount of units derived from amides considering the common and widespread use of polyamide-6 resulting in an acceptable error margin.

The term "recycled material" such as used herein denotes materials reprocessed from "recycled waste".

A polymer blend denotes a mixture of two or more polymeric components. In general, the blend can be prepared by mixing the two or more polymeric components. Suitable mixing procedures known in the art are post-polymerization blending procedures. Post-polymerization blending can be dry blending of polymeric components such as polymer powders and/or compounded polymer pellets or melt blending by melt mixing the polymeric components.

A "compatibilizer" is a substance in polymer chemistry, which is added to a blend of polymers having limited miscibility in order to improve the mechanical properties thereof.

If not indicated otherwise "%" refers to weight-%.

## Detailed Description

### Blend (A)

The polyethylene-polypropylene composition according to the present invention comprises from 96 to 99.7 wt.-% of blend (A). It is the essence of the present invention that blend (A) is obtained from a recycled waste stream. Blend (A) can be either recycled post-consumer waste or industrial waste, such as for example from the automobile industry, or alternatively, a combination of both.

It is particularly preferred that blend (A) consists of recycled post-consumer waste and/or industrial waste.

Preferably, blend (A) is obtained from recycled waste by means of plastic recycling processes known in the art. Such recyclates are commercially available, e.g. from Corepla (Italian Consortium for the collection, recovery, recycling of packaging plastic wastes), Resource Plastics Corp. (Brampton, ON), Kruschitz GmbH, Plastics and Recycling (AT), Vogt Plastik GmbH (DE), Mtm Plastics GmbH (DE) etc. Non-exhaustive examples of polyethylene rich recycled materials include: DIPOLEN S (Mtm Plastics GmbH), food grade rHDPE (BIFFA PLC) and a range of polyethylene rich materials, such as e.g. HD-LM02041 from PLASgran Ltd.

In a certain preferred embodiment, the recycled polyethylene rich material is DIPOLEN (Mtm Plastics GmbH), such as DIPOLEN S or DIPOLEN H, preferably DIPOLEN S. DIPOLEN is obtained from domestic waste streams (i.e. it is a product of domestic recycling) for example the "yellow bag" recycling system, which operates in some parts of Germany.

Blend (A) comprises the following components:

A-1) a content of isotactic polypropylene homopolymer of 30 to 70 wt.-%,
A-2) a content of polyethylene and ethylene containing copolymers of 20 to 50 wt.-%,

A-3) 0.5 to 4.0 wt.-% polyamide-6,

A-4) 0 to 3.0 wt.-% of stabilizers

A-5) 0 to 5.0 wt.-% of polystyrene,

A-6) 0 to 3.0 wt.-% talc,

A-7) 0 to 3.0 wt.-% chalk,

A-8) 0 to 1.0 wt.-% paper,

A-9) 0 to 1.0 wt.-% wood,

A-10) 0 to 0.5 wt.-% metal,

A-11) 1 ppm to 100 ppm of limonene as determined by using solid phase microextraction (HS-SPME-GC-MS), and

A-12) 1 ppm to 200 ppm total fatty acid content as determined by using solid phase microextraction (HS-SPME-GC-MS)

wherein amounts of A-1) to A-12) are given with respect to the total weight of blend (A).

Blend (A) may have a a content of polyethylene and ethylene containing copolymers of greater than 35 wt.-%, more preferably greater than 40 wt.-% with respect to the total weight of blend (A).

In addition, blend (A) may have a content of isotactic polypropylene homopolymer of greater than 40 wt.-%, but less than 65 wt.-%, with respect to the total weight of blend (A).

Blend (A) may also have a relative amount polyamide-6 of between 0.5 and 4.0 wt.%, preferably between 1.0 and 3.5 wt.%, more preferably between 1.0 and 3.0 wt.%, most preferably between 1.5 and 2.5 wt.-%

The polyethylene of the recycled material typically includes recycled high-density polyethylene (rHDPE), recycled medium-density polyethylene (rMDPE), recycled low-density polyethylene (rLDPE) and the mixtures thereof. In a certain embodiment, the polyethylene is high density PE with an average density of greater than 0.8 g/cm$^3$, preferably greater than 0.9 g/cm$^3$, most preferably greater than 0.91 g/cm$^3$.

According to the present invention, blend (A) has a content of limonene as determined using solid phase microextraction (HS-SPME-GC-MS) of from 1 ppm to 100 ppm, preferably from 1 ppm to 50 ppm, more preferably from 2 ppm to 50 ppm, most preferably from 3 ppm to 35 ppm. Limonene is conventionally found in recycled polyolefin materials and originates from packaging applications in the field of cosmetics, detergents, shampoos and similar products. Therefore, blend (A) contains limonene, when blend (A) contains material that originates from such types of domestic waste streams.

The fatty acid content is yet another indication of the recycling origin of blend (A). However, in some cases, the fatty acid content may be below the detection limit due to specific treatments in the recycling process.

According to the present invention, blend (A) preferably has a content of fatty acids as determined using solid phase microextraction (HS-SPME-GC-MS) of from 1 ppm to 200 ppm, preferably from 1 ppm to 150 ppm, more preferably from 2 ppm to 100 ppm, most preferably from 3 ppm to 80 ppm.

Due to the recycling origin blend (A) may also contain:

- organic fillers, and/or
- inorganic fillers, and/or
- additives

in amounts of up to 3 wt.-% with respect to the weight of blend (A).

According to the present invention, blend (A) has a melt flow rate (ISO 1133, 2.16 kg, 230°C) of 4 to 20 g/10min, preferably of 5 to 15 g/10min, more preferably of 6 to 12 g/10min.

As stated above blend (A) may include one or more further components, selected from:

A-4) up to 3.0 wt.-% stabilizers, preferably 0.01 to 3.0 wt.-% stabilizers,

A-5) up to 5.0 wt.-% polystyrene, preferably 0.1 to 5.0 wt.-% polystyrene,

A-6) up to 3.0 wt.-% talc, preferably 0.1 to 3.0 wt.-% talc,

A-7) up to 3.0 wt.-% chalk, preferably 0.1 to 3.0 wt.-% chalk,

A-8) up to 1.0 wt.-% paper, preferably 0.1 to 1.0 wt.-% paper,

A-9) up to 1.0 wt.-% wood, preferably 0.1 to 1.0 wt.-% wood, and

A-10) up to 0.5 wt.-% metal preferably 0.1 to 0.5 wt.-% metal,

based on the overall weight of blend (A).

It is needless to say, during recycling usually any reasonable measure will be taken for lowering polyamides, talc, chalk, paper, wood and metal as far as final application or use suggests such measure.

## Compatibilizer (B)

The polyolefin composition of the invention comprises 0.3 to 4.0 wt.-% of a compatibilizer (B), being a maleic anhydride-grafted styrene ethylene butylene styrene (SEBS) block copolymer, with respect to the total weight of the polyolefin composition. In a preferred embodiment, the amount of compatibilizer is 0.4 to 3.5 wt.-% with respect to the total of the polyolefin composition.

The term 'maleic anhydride-grafted' has a well-known meaning in the art.

The maleic anhydride-grafted styrene ethylene butylene styrene (SEBS) block copolymer compatibilizer (B) has a melt volume rate (ISO 1133, 5.0 kg, 230°C) of 10 to 40 $cm^3$/10 min, preferably of 15 to 35 $cm^3$/10min.

Furthermore, the maleic anhydride-grafted styrene ethylene butylene styrene (SEBS) block copolymer compatibilizer (B) has a maleic anhydride content of 0.5 to 15.0 wt.-% as determined by FT-IR spectroscopy. More preferably the maleic anhydride-grafted polypropylene compatibilizer (B) has a maleic anhydride content of 5.0 to 12.0 wt.-%, most preferably of 8.0 to 10.0 wt.-% as determined by FT-IR spectroscopy.

Preferably, compatibilizer (B) has a content of characteristic signals corresponding to

(i) polypropylene of 3.0 to 10.0 wt.-%; more preferably 4.0 to 9.0 wt.-% and
(ii) polystyrene of 25.0 to 35.0 wt.-%; more preferably 26.0 to 33.0 wt.-% and
(iii) butene derived polymer chain of 15.0 to 25.0 wt.-%, more preferably 17.0 to 23.0 wt.-% and
(iv) ethylene derived polymer chain of 40.0 to 50.0 wt.-%, preferably 41.0 to 47.0 wt.-%;

under the proviso that signals corresponding to (i), (ii), (iii) and (iv) amount to a total of 100 wt.-% as determined by quantitative $^{13}C\{^1H\}$ NMR spectroscopy. Preferably, the amounts are determined as described in the experimental part.

In one embodiment the maleic anhydride-grafted styrene ethylene butylene styrene (SEBS) block copolymer compatibilizer has a melt volume rate (ISO 1133, 5.0 kg, 230°C) of 15 to 35 $cm^3$/10 min and a maleic anhydride content of 0.5 to 15.0 wt.-% as determined by FT-IR spectroscopy.

In a preferred embodiment the maleic anhydride-grafted styrene ethylene butylene styrene (SEBS) block copolymer compatibilizer has a melt volume rate (ISO 1133, 5.0 kg, 230°C) of 15 to 35 $cm^3$/10 min and a maleic anhydride content of 5.0 to 12.0 wt.-% as determined by FT-IR spectroscopy.

Further preferred is an embodiment in which the maleic anhydride-grafted styrene ethylene butylene styrene (SEBS) block copolymer compatibilizer has a melt volume rate (ISO 1133, 5.0 kg, 230°C) of 15 to 35 $cm^3$/10 min and a maleic anhydride content of 8.0 to 10.0 wt.-% as determined by FT-IR spectroscopy.

Commercial compatibilizers (B) fulfilling the requirements of the present invention are also available with one suitable resin being Byk Kometra SCONA TSKD 9103. A person skilled in the art will understand that existing commercial grades may be modified for the present invention.

## Polyolefin composition

The polyolefin composition of the invention is obtainable by blending

a) 96.0 to 99.7 wt.-% based on the overall weight of the polyolefin composition of a blend (A) comprising

A-1) a content of isotactic polypropylene homopolymer of 30 to 70 wt.-%,
A-2) a content of polyethylene and ethylene containing copolymers of 20 to 50 wt.-%,
A-3) 0.5 to 4.0 wt.-% polyamide-6,
A-4) 0 to 3.0 wt.-% of stabilizers
A-5) 0 to 5.0 wt.-% of polystyrene,
A-6) 0 to 3.0 wt.-% talc,
A-7) 0 to 3.0 wt.-% chalk,
A-8) 0 to 1.0 wt.-% paper,
A-9) 0 to 1.0 wt.-% wood,
A-10) 0 to 0.5 wt.-% metal,
A11) 1 ppm to 100 ppm of limonene as determined by using solid phase microextraction (HS-SPME-GC-MS), and
A-12) 1 ppm to 200 ppm total fatty acid content as determined by using solid phase microextraction (HS-SPME-GC-MS)

wherein amounts of A-1) to A-12) are given with respect to the total weight of blend (A),
wherein blend (A) is a recycled material, which is recovered from a waste plastic material derived from post-consumer and/or post-industrial waste; and wherein blend (A) has a melt flow rate (ISO 1133, 2.16 kg, 230°C) of 4.0 to 20.0 g/10min, and

b) 0.3 to 4.0 wt.-% based on the overall weight of the polyolefin composition of a compatibilizer (B) being a maleic anhydride-grafted styrene ethylene

butylene styrene (SEBS) block copolymer having a melt volume rate (ISO 1133, 5.0 kg, 230°C) of 10 to 40 $cm^3$/10min and a maleic anhydride content of 0.5 to 15.0 wt.-% as determined by FT-IR spectroscopy

wherein blend (A) and compatibilizer (B) are as described in the above sections.

The inventive polyolefin composition may have a melt flow rate (ISO 1133, 2.16 kg, 230°C) of between 3.0 and 10.0 g/10min, preferably between 3.5 and 8.0 g/10min, more preferably between 4.0 and 7.0 g/10min, and still further preferably between 4.0 and 5.5 g/10 min.

As outlined above, it is appreciated that the polyolefin composition according to the invention features a good impact strength without compromising the stiffness, reflected by the tensile modulus of from 830 to 1200 MPa (ISO 527-1,2) when measured on an injection molded test specimen.

Accordingly, it is preferred that the polyolefin composition of the invention has a Charpy Impact Strength (ISO 179-1; 1eA, 23°C) of more than 6.5 $kJ/m^2$ and up to 10 $kJ/m^2$, preferably of more than 6.7 $kJ/m^2$ and up to 10 $kJ/m^2$, more preferably of more than 6.9 $kJ/m^2$ and up to 10 $kJ/m^2$. Usually the Charpy Impact Strength (ISO 179-1; 1 eA, 23°C) will not be higher than 10.0 $kJ/m^2$ and in some embodiments even not higher than 9 $kJ/m^2$.

Additionally, the inventive polyolefin composition has a tensile modulus of from 830 to 1200 MPa (ISO 527-1,2) when measured on an injection molded test specimen, preferably of from 860 to 1200 MPa, more preferably of at least 870 MPa to 1200 MPa, and most preferably of from 880 to 1200 MPa.

In one embodiment, the inventive polyolefin composition has at least one, preferably all, of the following properties:

a) a melt flow rate (ISO 1133, 2.16 kg, 230°C) of between 3.0 and 10.0 g/10min, preferably between 3.5 and 8.0 g/10min, more preferably between 4.0 and 7.0 g/10min, and still further preferably between 4.0 and 5.5 g/10 min,
b) a tensile modulus of at least 830 MPa (ISO 527-1,2) to 1200 MPa when measured on an injection molded test specimen, preferably of at least 850 MPa to 1200 MPa, more preferably of at least 860 MPa to 1200 MPa, still further preferably 870 MPa to 1200 MPa, and most preferably of at least 880 MPa to 1200 MPa,
c) a Charpy Impact Strength (ISO 179-1; 1eA, 23°C) of more than 6.5 $kJ/m^2$ and up to 10 $kJ/m^2$, preferably of more than 6.7 $kJ/m^2$ and up to 10 $kJ/m^2$, more preferably of more than 6.9 $kJ/m^2$ and up to 10 $kJ/m^2$.

In another embodiment, the inventive polyolefin composition has all of the following properties:

a) a melt flow rate (ISO 1133, 2.16 kg, 230°C) of between 3.0 and 10.0 g/10min, preferably between 3.5 and 8.0 g/10min, more preferably between 4.0 and 7.0 g/10min, and still further preferably between 4.0 and 5.5 g/10 min,
b) a tensile modulus of at least 830 MPa (ISO 527-1,2) to 1200 MPa when measured on an injection molded test specimen, preferably of at least 850 MPa to 1200 MPa, more preferably of at least 860 MPa to 1200 MPa, still further preferably 870 MPa to 1200 MPa, and most preferably of at least 880 MPa to 1200 MPa,
c) a Charpy Impact Strength (ISO 179-1; 1eA, 23°C) of more than 6.5 $kJ/m^2$ and up to 10 $kJ/m^2$, preferably of more than 6.7 $kJ/m^2$ and up to 10 $kJ/m^2$, more preferably of more than 6.9 $kJ/m^2$ and up to 10 $kJ/m^2$.

**Stabilizers**

As described above, the polyolefin composition, and more preferably the blend (A), can and usually will comprise stabilizers. These stabilizers are typically compounds such as antioxidants, anti-acids, anti-blocking agents, anti-UVs, nucleating agents and anti-static agents.

Examples of antioxidants which are commonly used in the art are sterically hindered phenols (such as CAS No. 6683-19-8, also sold as Irganox 1010 FF™ by BASF), phosphorous based antioxidants (such as CAS No. 31570-04-4, also sold as Hostanox PAR 24 (FF)™ by Clariant or Irgafos 168 (FF)TM by BASF), sulphur based antioxidants (such as CAS No. 693- 36-7, sold as Irganox PS-802 FL™ by BASF), nitrogen-based antioxidants (such as 4,4'- bis(1,1'-dimethylbenzyl)diphenylamine), or antioxidant blends.

Anti-acids are also commonly known in the art. Examples are calcium stearates, sodium stearates, zinc stearates, magnesium and zinc oxides, synthetic hydrotalcite (e.g. SHT, CAS-No. 11097-59-9), lactates and lactylates, as well as calcium stearate (CAS No. 1592-23-0) and zinc stearate (CAS No. 557-05-1);

Common antiblocking agents are natural silica such as diatomaceous earth (such as CAS No. 60676-86-0 (SuperfFloss™), CAS-No. 60676-86-0 (SuperFloss E™), or CAS-No. 60676-86-0 (Celite 499™)), synthetic silica (such as CAS-No. 7631-86-9, CAS-No. 7631-86-9, CAS-No. 7631-86-9, CAS-No. 7631-86-9, CAS-No. 7631-86-9, CAS-No.

7631-86-9, CAS-No. 112926-00-8, CAS-No. 7631-86-9, or CAS-No. 7631-86-9), silicates (such as aluminium silicate (Kaolin) CAS-no. 1318-74-7, sodium aluminum silicate CAS-No. 1344-00-9, calcined kaolin CAS-No. 92704-41-1, aluminum silicate CAS-No. 1327-36-2, or calcium silicate CAS-No. 1344-95-2), synthetic zeolites (such as sodium calcium aluminosilicate hydrate CAS-No. 1344-01-0, CAS-No. 1344-01-0, or sodium calcium aluminosilicate, hydrate CAS-No. 1344-01-0).

Anti-UVs are, for example, Bis-(2,2,6,6-tetramethyl-4-piperidyl)-sebacate (CAS -No. 52829-07-9, Tinuvin 770); 2-hydroxy-4-n-°Ctoxy-benzophenone (CAS-No. 1843-05-6, Chimassorb 81).

Nucleating agents like sodium benzoate (CAS No. 532-32-1); 1,3:2,4-bis(3,4-dimethylbenzylidene)sorbitol (CAS 135861-56-2, Millad 3988) may be contained.

Suitable antistatic agents are, for example, glycerol esters (CAS No. 97593-29-8) or ethoxylated amines (CAS No. 71786-60-2 or 61791-31-9) or ethoxylated amides (CAS No. 204-393-1).

## Article

The present application is further directed to an article comprising the polyolefin composition as described above.

All preferred aspects and embodiments as described above shall also hold for the article.

## Process

The process according to the present invention for preparing the polyolefin composition, comprises the steps of

a) providing the blend (A) as described herein in an amount of 96.0 to 99.7 wt.%, based on the overall weight of the polyolefin composition
b) providing the compatibilizer (B) as described herein in an amount of 0.3 to 4.0 wt.-%, based on the overall weight of the polyolefin composition
c) melting and mixing blend (A) and the compatibilizer (B) in an extruder, and
d) optionally pelletizing the obtained polyolefin composition

All preferred aspects and embodiments as described above shall also hold for the process.

## Use of compatibilizer (B)

The present invention is further directed to the use of a compatibilizer (B) being a maleic anhydride-grafted styrene ethylene butylene styrene (SEBS) block copolymer having

i) a melt volume rate (ISO 1133, 5.0 kg, 230°C) of 10 to 40 cm$^3$/10min,
ii) a maleic anhydride content of 0.5 to 15.0 wt.-% as determined by FT-IR spectroscopy,

for blending with a blend (A) comprising

A-1) a content of isotactic polypropylene homopolymer of 30 to 70 wt.-%,
A-2) a content of polyethylene and ethylene containing copolymers of 20 to 50 wt.-%,
A-3) 0.5 to 4.0 wt.-% polyamide-6,
A-4) 0 to 3.0 wt.-% of stabilizers
A-5) 0 to 5.0 wt.-% of polystyrene,
A-6) 0 to 3.0 wt.-% talc,
A-7) 0 to 3.0 wt.-% chalk,
A-8) 0 to 1.0 wt.-% paper,
A-9) 0 to 1.0 wt.-% wood,
A-10) 0 to 0.5 wt.-% metal,
A-11) 1 ppm to 100 ppm of limonene as determined by using solid phase microextraction (HS-SPME-GC-MS), and
A-12) 1 ppm to 200 ppm total fatty acid content as determined by using solid phase microextraction (HS-SPME-GC-MS)

wherein amounts A-1) to A-12) are given with respect to the total weight of blend (A),
wherein blend (A) is a recycled material, which is recovered from a waste plastic material derived from post-consumer and/or post-industrial waste; and wherein blend (A) has a melt flow rate (ISO 1133, 2.16 kg, 230°C) of 4 to 20 g/10min to obtain an upgraded polyolefin composition having a tensile modulus of from 830 to 1200 MPa (ISO 527-1,2) when measured on an injection molded test specimen and preferably a Charpy Impact Strength (ISO 179-1; 1 eA, 23 °C) of more than 6.5 kJ/m$^2$ and up to 10.0 kJ/m$^2$.

All preferred aspects, definitions and embodiments as described above shall also hold for the use.

**Experimental Section**

The following Examples are included to demonstrate certain aspects and embodiments of the invention as described in the claims. It should be appreciated by those of skill in the art, however, that the following description is illustrative only and should not be taken in any way as a restriction of the invention.

**Test Methods**

**a) Amount of iPP, Polystyrene, Polyethylene (and ethylene containing copolymers) and Amount of Polyamide-6**

To establish different calibration standards, iPP (abbreviation for isotactic polypropylene homopolymer) and HDPE and iPP, PS and PA6 were blended. For the quantification of the content of the foreign polymers, IR spectra were recorded in the solid-state using a Bruker Vertex 70 FTIR spectrometer. Films were prepared with a compression-moulding device at 190 °C with 4 - 6 MPa clamping force. The thickness of the films for the calibration standards for iPP and HDPE was 300 $\mu$m and for the quantification of the iPP, PS and PA 6 50-100 $\mu$m film thickness was used. Standard transmission FTIR spectroscopy is employed using a spectral range of 4000-400 cm$^{-1}$, an aperture of 6 mm, a spectral resolution of 2 cm$^{-1}$, 16 background scans, 16 spectrum scans, an interferogram zero filling factor of 32 and Norton Beer strong apodisation.

The absorption of the band at 1167 cm$^{-1}$ in iPP is measured and the iPP content is quantified according to a calibration curve (absorption/thickness in cm versus iPP content in weight %).

The absorption of the band at 1601 cm$^{-1}$ (PS) and 3300 cm$^{-1}$ (PA6) are measured and the PS and PA6 content quantified according to the calibration curve (absorption/thickness in cm versus PS and PA content in wt %). The content of polyethylene and ethylene containing copolymers is obtained by subtracting (iPP+PS+PA6) from 100, taking into account the content of non-polymeric impurities as determined in the methods below. The analysis is performed as a double determination.

b) Maleic anhydride content.

FT-IR standards are prepared by blending a PP homopolymer with different amounts of MAH to create a calibration curve (absorption/thickness in cm versus MAH content in weight %). The MAH content is determined in the solid-state by IR spectroscopy using a Bruker Vertex 70 FTIR spectrometer on 25x25 mm square films of 100 $\mu$m thickness (with an accuracy of $\pm$ 1 $\mu$m) prepared by compression moulding at 190 °C with 4 - 6 MPa clamping force. Standard transmission FTIR spectroscopy is employed using a spectral range of 4000-400 cm$^{-1}$, an aperture of 6 mm, a spectral resolution of 2 cm$^{-1}$, 16 background scans, 16 spectrum scans, an interferogram zero filling factor of 32 and Norton Beer strong apodisation.

At the adsorption band peak of 1787 cm$^{-1}$ MAH is measured. For the calculation of the MAH content the range between 1830-1727 cm$^{-1}$ is evaluated (after a base line correction) following the calibration standard curve.

**c) Amount of Talc and Chalk**

were measured by Thermogravimetric Analysis (TGA); experiments were performed with a Perkin Elmer TGA 8000. Approximately 10-20 mg of material was placed in a platinum pan. The temperature was equilibrated at 50°C for 10 minutes, and afterwards raised to 950°C under nitrogen at a heating rate of 20 °C/min. The weight loss between ca. 550°C and 700°C (WCO2) was assigned to CO2 evolving from CaCO3, and therefore the chalk content was evaluated as:

$$\text{Chalk content} = 100/44 \times WCO2$$

Afterwards the temperature was lowered to 300°C at a cooling rate of 20 °C/min. Then the gas was switched to oxygen, and the temperature was raised again to 900°C. The weight loss in this step was assigned to carbon black (Wcb). Knowing the content of carbon black and chalk, the ash content excluding chalk and carbon black was calculated as:

$$\text{Ash content} = (\text{Ash residue}) - 56/44 \times WCO2 - Wcb$$

Where Ash residue is the weight% measured at 900°C in the first step conducted under nitrogen. The ash content is estimated to be the same as the talc content for the investigated recyclates.

### d) Amount of Paper, Wood

Paper and wood were determined by conventional laboratory methods including milling, floatation, microscopy and Thermogravimetric Analysis (TGA).

### e) Amount of Metals

was determined by x ray fluorescence (XRF).

### f) Amount of Limonene

was determined by solid phase microextraction (HS-SPME-GC-MS).
Additional details are given below with respect to the specific sample.

### g) Amount of total fatty acids

was determined by solid phase microextraction (HS-SPME-GC-MS).
Additional details are given below with respect to the specific sample.
**h) Melt (mass-)flow rates (MFR) and melt volume-flow rates (MVR)** were measured with a load of 2.16 kg or 5.0 kg respectively ($MFR_2$ or $MVR_5$) at 230 °C or 190°C as indicated. The melt flow rate ($MFR_2$) is the quantity of polymer in grams that the test apparatus standardized to ISO 1133 extrudes within 10 minutes at a temperature of 230 °C (or 190°C) under a load of 2.16 kg. Similarly the melt volume rate (MVR5) is the volume of polymer in $cm^3$ that the test apparatus standardized to ISO 1133 extrudes within 10 minutes at a temperature of 230°C (or 190 °C) under a load of 5.0 kg.
For measurements of MFR (procedure A), timed segments of the extrudate are weighed and used to calculate the extrusion rate, in g/10min .
For measurement of MVR (procedure B), the distance that the piston moves in a specified time or the time required for the piston to move a specified distance is recorded and used to calculate the extrusion rate in $cm^3$/10min
MVR can be converted to MFR, or vice versa, if the melt density of a material at the test temperature is known.

### i) Isotacticity

Quantitative nuclear-magnetic resonance (NMR) spectroscopy was used to quantify the isotacticity and tacticity distribution. Quantitative $^{13}C\{^1H\}$ NMR spectra recorded in the solution-state using a Bruker Avance III 400 NMR spectrometer operating at 400.15 and 100.62 MHz for $^1H$ and $^{13}C$ respectively. All spectra were recorded using a $^{13}C$ optimised 10 mm selective excitation probehead at 125°C using nitrogen gas for all pneumatics. Ideally approximately 200 mg of material was dissolved in *1,2*-tetrachloroethane-$d_2$ (TCE-$d_2$), if only less amount of material available (*e.g.* fractions) extended number of transients needed. This setup was chosen primarily for the high resolution needed for tacticity distribution quantification {busico01, busico97}. Standard single-pulse excitation was employed utilising the NOE and bilevel WALTZ16 decoupling scheme {zhou07, busico07}. A total of 6144 (6k) transients respectively 16384 (16k) for extended measurements were acquired per spectra. All chemical shifts are internally referenced to the methyl signal of the isotactic pentad mmmm at 21.85 ppm.
The tacticity distribution was quantified through integration of the methyl region between 23.6 and 19.7 ppm correcting for any sites not related to the stereo sequences of interest {busico01, busico97}.
The pentad tacticity distribution was determined through direct separate integration of each methyl signal from a given steric pentad followed by normalisation to the sum of methyl signals from all steric pentads. The relative content of a specific steric pentad was reported as the mole fraction or percentage of a given steric pentad xxxx with respect to all steric pentads:

$$[xxxx] = xxxx / (mmmm + mmmr + rmmr + mmrr + xmrx + mrmr + rrrr + mrrr + mrrm)$$

where xmrx represents the combined integral of both mmrm and rmrr as signal from these steric pentads are not commonly resolved. The pentad isotacticity was thus given by:

$$[mmmm] = mmmm / (mmmm + mmmr + rmmr + mmrr + xmrx + mrmr + rrrr + mrrr + mrrm)$$

The triad tacticity distribution was indirectly determined from the pentad tacticity distribution using the known pentad-triad necessary relationships:

$$[mm] = [mmmm] + [mmmr] + [rmmr]$$

$$[mr] = [mmrr] + [xmrx] + [mrmr]$$

$$[rr] = [rrrr] + [mrrr] + [mrrm]$$

busico01:
Busico, V., Cipullo, R., Prog. Polym. Sci. 26 (2001) 443
busico97:
Busico, V., Cipullo, R., Monaco, G., Vacatello, M., Segre, A.L., Macromolecules 30 (1997) 6251
zhou07:
Zhou, Z., Kuemmerle, R., Qiu, X., Redwine, D., Cong, R., Taha, A., Baugh, D. Winniford, B., J. Mag. Reson. 187 (2007) 225
busico07:
Busico, V., Carbonniere, P., Cipullo, R., Pellecchia, R., Severn, J., Talarico, G., Macromol. Rapid Commun. 2007, 28, 1128

**j) Microstructure of compatibilizer (B)**

Quantitative 13C{1H} NMR spectra recorded in solution-state using a Bruker Avance III 400 NMR spectrometer operating at 400.15 and 100.62 MHz for 1H and 13C respectively. All spectra were recorded using a 13C optimised 10 mm selective excitation probehead at 125°C using nitrogen gas for all pneumatics. Approximately 200 mg of material was dissolved in 1,2-tetrachloroethane-d2 (TCE-d2), using approximately 3 mg of BHT (CAS 128-37-0) as stabiliser. Standard single-pulse excitation was employed utilising a 30 degree pulse, an inverse gated waltz16 decoupling scheme, a relaxation delay of 25 s and 10 Hz sample rotation. A total of at least 1k transients were acquired per spectra using 4 dummy scans.

Quantitative 13C{1H} NMR spectra were processed, integrated and relevant quantitative properties determined from the integrals. All chemical shifts were referenced to the central methylene group of the ethylene block ($S_{\delta\delta}$) at 30.00 ppm. Characteristic signals corresponding to the presence of polypropylene (PP) were observed {randall89, brandolini00} at 46.6 ppm, 29.0 ppm and 22.0 ppm. The amount was quantified using the integral of the $S_{\alpha\alpha}$ at 46.6 ppm accounting for the number of PP:

$$fmolPP = IS\alpha\alpha$$

Characteristic signals corresponding to the presence of polystyrene (PS) were observed {randall89, brandolini00} at 146.0 ppm, 128.3 ppm, 126.0 ppm, 45.9 - 42.6 ppm and 42.1 - 41.0 ppm. The amount was quantified using the integral of the aromatic methine carbons ($T_{arom}$) at 128.3 ppm accounting for the number of PS:

$$fmolPS = IT_{arom} / 4$$

Characteristic signals corresponding to the presence of isolated and consecutive double incorporation of butene (C4) in ethylene were observed {randall89, brandolini00} at 39.8 ppm, 34.1 ppm, 27.3 ppm, 26.7 ppm and 11.2 ppm respectively 39.2 ppm, 37.3 ppm and 11.0 ppm. The amount of butene was quantified using the integral of the starB2 at 39.8 ppm respectively the signal from starB2B2 at 37.3 ppm accounting for the overall number of C4:

$$fmolC4 = IstarB2 + IstarB2B2$$

Characteristic signals corresponding to the presence of polyethylene (C2) showing presence of isolated and consecutive double incorporation of butene were observed {ranadall89, brandolini00} and the amount quantified using the integral of both the backbone methylene S$\delta\delta$ at 30.0 ppm and the S$\gamma\delta$ at 30.5 ppm. Compensation of the missing ethylene based carbons done by use of starB2 and starB2B2 to count for the number of C2:

$$fmolC2 = [IS\delta\delta + IS\gamma\delta + (IstarB2 * 3) + (IstarB2B2 / 2 *3)] / 2$$

The specific amounts molxx [mol%] of the components are quantified in the usual manner:

$$molPP \text{ [mol\%]} = (fmolPP * 100) / (fmolPP + fmolPS + fmolC4 + fmolC2)$$

$$molPS \text{ [mol\%]} = (fmolPS * 100) / (fmolPP + fmolPS + fmolC4 + fmolC2)$$

$$molC4 \text{ [mol\%]} = (fmolC4 * 100) / (fmolPP + fmolPS + fmolC4 + fmolC2)$$

$$molC2 \text{ [mol\%]} = (fmolC2 * 100) / (fmolPP + fmolPS + fmolC4 + fmolC2)$$

The weight percentages [wt%] of the components are quantified from the molxx [mol%] considering the molar masses of the components in the usual manner:

$$PP \text{ [wt\%]} = (molPP * 42 * 100) / [(molPP*42) + (molPS*104) + (molC4*56) + (molC2*28)]$$

$$PS \text{ [wt\%]} = (molPS * 104 * 100) / [(molPP*42) + (molPS*104) + (molC4*56) + (molC2*28)]$$

$$C4 \text{ [wt\%]} = (molC4 * 56 * 100) / [(molPP*42) + (molPS*104) + (molC4*56) + (molC2*28)]$$

$$C2 \text{ [wt\%]} = (molC2 * 28 * 100) / [(molPP*42) + (molPS*104) + (molC4*56) + (molC2*28)]$$

randall89: J. Randall, Macromol. Sci., Rev. Macromol. Chem. Phys. 1989, C29, 201.

brandolini00: A. J. Brandolini, D. D. Hills, NMR Spectra of Polymers and Polymer Additives, Marcel Dekker Inc., 2000

**k) Tensile modulus** was measured according to ISO 527-2 (cross head speed = 1 mm/min; test speed 50 mm/min at 23 °C) using compression moulded specimens as described in EN ISO 1873-2 (dog bone shape, 4 mm thickness). The measurement was done after 96 h conditioning time of the specimen.

**l) Impact strength** was determined as Charpy Notched Impact Strength according to ISO 179-1 eA at +23 °C on injection moulded specimens of 80 x 10 x 4 mm prepared according to EN ISO 1873-2. According to this standard samples are tested after 96 hours.

**Experiments**

A number of blends were produced with DIPOLEN S as blend (A), a polyethylene-polypropylene blend from Mtm Plastics GmbH, materials according to the August 2018 specifications.

Dipolen S-sample

| | |
|---|---|
| Isotactic polypropylene homopolymer | 59 wt.-% |
| Polyethylene and ethylene containing copolymers | 33 wt.-% |
| Polystyrene | 2.3 wt.-% |
| Polyamide-6 | 2.9 wt.-% |
| Talc content | 0.4 wt.-% |
| Chalk content | 0.2 wt.-% |
| Paper content | < 1.0 wt.-% |
| Wood content | < 1.0 wt.-% |
| Metal content | < 0.2 wt.-% |
| Limonene content | 32 mg/kg |
| Total fatty acid content | 71 mg/kg |

**Comparative example 1:**

For CE1, no compatibilizer was used; therefore the composition consists of DIPOLEN S.

**Comparative examples 2-4:**

For CE2 to CE4, the compatibilizer Queo 8207 (an ethylene based 1-octene plastomer, commercially available from Borealis AG) was used in amounts of 5 wt.%, 10 wt.-%, and 20 wt.-% (In CE2, CE3 and CE4 respectively)

**Inventive examples:**

In each of the inventive examples IE1 to IE3, SCONA TSKD 9103 (a SEBS-g-MAH with a maleic anhydride content of 9.5 wt.-%, commercially available from Byk Kometra) was used as compatibilizer (B), in amounts disclosed in Table 1.
Additionally, inventive examples IE1 to IE3 contained Irganox B225F in 0.3 wt.-%, and HC001A-B1 in the range from 0.7 to 1.2 wt.-% (See Table 3) as stabilisers
The compositions were prepared via melt blending on a co-rotating twin screw extruder.
The polymer melt mixture was discharged and pelletized. For testing the mechanical properties, specimens were produced and tested according to ISO 179 with 1eA notched specimens to measure the Charpy notched impact strength and according to ISO 527-1/2 with 1A specimens to measure the tensile properties at room temperature.

**Microstructure of compatibilizer (B)**

SCONA TSKD 9103 (a SEBS-g-MAH with a maleic anhydride content of 9.5 wt.-% measured by FT-IR, commercially available from Byk Kometra) was subjected to Quantitative $^{13}C\{^{1}H\}$ NMR analysis as outlined above.

| SCONA TSKD 9103 Characteristic signals corresponding to | |
|---|---|
| polypropylene | 6.7 wt.-% |
| polystyrene | 29.2 wt.-% |

(continued)

| SCONA TSKD 9103<br>Characteristic signals corresponding to | |
|---|---|
| butylene derived polymer chain | 19.5 wt.-% |
| ethylene derived polymer chain | 44.6 wt.-% |
| total polypropylene + polystyrene + butylene derived polymer chain + ethylene derived polymer chain | 100 wt.-% |

| SCONA TSKD 9103<br>Total percentages calculated from $^{13}C\{^1H\}$ NMR analysis in combination with MAH content measured by FT-IR | |
|---|---|
| MAH (FT-IR) | 8.7 wt.-% |
| polypropylene | 6.1 wt.-% |
| polystyrene | 26.7 wt.-% |
| butylene derived polymer chain | 17.8 wt.-% |
| ethylene derived polymer chain | 40.7 wt.-% |
| total | 100 wt.-% |

**Limonene content in DIPOLEN** - **details**

Limonene quantification was carried out using solid phase microextraction (HS-SPME-GC-MS) by standard addition.

50 mg ground samples were weighed into 20 mL headspace vials and after the addition of limonene in different concentrations and a glass-coated magnetic stir bar, the vial was closed with a magnetic cap lined with silicone/PTFE. Micro capillaries (10 pL) were used to add diluted limonene standards of known concentrations to the sample. Addition of 0, 2, 20 and 100 ng equals 0 mg/kg, 0.1 mg/kg, 1mg/kg and 5 mg/kg limonene, in addition standard amounts of 6.6 mg/kg, 11 mg/kg and 16.5 mg/kg limonene were used in combination with some of the samples tested in this application. For quantification, ion-93 acquired in SIM mode was used. Enrichment of the volatile fraction was carried out by headspace solid phase microextraction with a 2 cm stable flex 50/30 pm DVB/Carboxen/PDMS fibre at 60°C for 20 minutes.

Desorption was carried out directly in the heated injection port of a GCMS system at 270°C.

GCMS Parameters:

Column: 30 m HP 5 MS 0.25*0.25
Injector: Splitless with 0.75 mm SPME Liner, 270°C
Temperature program: -10°C (1 min)
Carrier gas: Helium 5.0, 31 cm/s linear velocity, constant flow
MS: Single quadrupole, direct interface, 280°C interface temperature
Acquisition: SIM scan mode
Scan parameter: 20-300 amu
SIM Parameter: m/Z 93, 100 ms dwell time

**Table 1: Limonene content in DIPOLEN (Blend (A))**

| Sample | Limonene [mg/ kg] HS-SPME-GC-MS[1] |
|---|---|
| Dipolen S | 31.5±2.6 |
| [1]Headspace Solidphase Microextraction. Materials available from mtm plastics GmbH, according to 2018 specifications. | |

**Total free fatty acid content**

Fatty acid quantification was carried out using headspace solid phase micro-extraction (HS-SPME-GC-MS) by standard addition.

50 mg ground samples were weighed in 20 mL headspace vial and after the addition of limonene in different concentrations and a glass coated magnetic stir bar the vial was closed with a magnetic cap lined with silicone/PTFE. 10 μL Micro-capillaries were used to add diluted free fatty acid mix (acetic acid, propionic acid, butyric acid, pentanoic acid, hexanoic acid and octanoic acid) standards of known concentrations to the sample at three different levels. Addition of 0, 50, 100 and 500 ng equals 0 mg/kg, 1 mg/kg, 2 mg/kg and 10 mg/kg of each individual acid. For quantification ion 60 acquired in SIM mode was used for all acids except propanoic acid, here ion 74 was used.

GCMS Parameter:

Column: 20 m ZB Wax plus 0.25*0.25
Injector: Split 5:1 with glass lined split liner, 250°C
Temperature program: 40°C (1 min) @6°C/min to 120°C, @15°C to 245 °C (5 min)
Carrier: Helium 5.0, 40 cm/s linear velocity, constant flow
MS: Single quadrupole, direct interface, 220°C inter face temperature
Acquisition: SIM scan mode
Scan parameter: 46-250 amu 6.6 scans/s
SIM Parameter: m/z 60,74, 6.6 scans/s

**Table 2: Total fatty acid content in Dipolen (Blend (A))**

| Sample | Total fatty acid concentration [mg/ kg][1] |
|---|---|
| Dipolen S | 70.6 |

[1]The concentration of acetic acid, propionic acid, butyric acid, pentanoic acid, hexanoic acid octanoic acid, nonanoic acid and decanoic acid in each sample was added together to give a totally fatty acid concentration value.

**Table 3: Results**

|  |  | CE1 | CE2 | CE3 | CE4 | IE1 | IE2 | IE3 |
|---|---|---|---|---|---|---|---|---|
| DIPOLEN S | wt.-% | 100 | 95 | 90 | 80 | 99.2 | 98.2 | 96.7 |
| Queo 8207 | wt.-% |  | 5 | 10 | 20 |  |  |  |
| SCONA TSKD 9103 | wt.-% |  |  |  |  | 0.5 | 1.5 | 3.0 |
| Irganox B225F | wt.-% |  |  |  |  | 0.3 | 0.3 | 0.3 |
| MFR (2.16 kg, 230 °C) | g/10min | 6 | 5.9 | 6.2 | 6.8 | 5.2 | 4.9 | 4.5 |
| Nominal tensile strain at break (ISO 527-1) | % | 110.9 | 230 | 286 | 434 | 77 | 85 | 140 |
| Tensile Modulus | MPa | 980 | 798 | 745 | 602 | 944 | 925 | 883 |
| Impact strength @ 23°C (ISO 189-1) | kJ/m$^2$ | 5.9 | 6.4 | 8.2 | 30.2 | 7.0 | 7.6 | 8.5 |
| Failure mode |  |  | C | C | P |  |  |  |
| Impact strength @ -30°C | kJ/m$^2$ | 2.1 |  |  |  | 1.9 | 1.9 | 1.8 |

As can be seen from the table, the inventive examples display improved impact properties over DIPOLEN S (CE1). Furthermore, the amount of compatibilizer required is far lower for the inventive examples (using the compatibilizer of the present invention) than for comparative examples CE2 to CE4 (using Queo 8207). Comparing for example IE1 and CE2; an impact strength of 7.0 kJ/m$^2$ is observed for IE1, with the addition of just 0.5 wt.-% of compatibilizer. CE2 achieves a similar impact strength of 6.4 kJ/m$^2$ but uses 5.0 wt.-% of compatibilizer. Consequently, the tensile properties of the resulting composition are much improved (compare IE1 to IE3 with CE2 to CE4).

**EP 4 055 102 B1**

**Claims**

1.  A polyolefin composition obtainable by blending

    a) 96.0 to 99.7 wt.-% based on the overall weight of the polyolefin composition of a blend (A) comprising

    A-1) a content of isotactic polypropylene homopolymer of 30 to 70 wt.-%,
    A-2) a content of polyethylene and ethylene containing copolymers of 20 to 50 wt.-%,
    A-3) 0.5 to 4.0 wt.-% polyamide-6,
    A-4) 0 to 3.0 wt.-% of stabilizers
    A-5) 0 to 5.0 wt.-% of polystyrene,
    A-6) 0 to 3.0 wt.-% talc,
    A-7) 0 to 3.0 wt.-% chalk,
    A-8) 0 to 1.0 wt.-% paper,
    A-9) 0 to 1.0 wt.-% wood,
    A-10) 0 to 0.5 wt.-% metal,
    A-11) 1 ppm to 100 ppm of limonene as determined by using solid phase microextraction (HS-SPME-GC-MS), and
    A-12) 1 ppm to 200 ppm total fatty acid content as determined by using solid phase microextraction (HS-SPME-GC-MS)
    wherein amounts of A-1) to A-12) are given with respect to the total weight of blend (A),

    wherein blend (A) is a recycled material, which is recovered from a waste plastic material derived from post-consumer and/or post-industrial waste; and wherein blend (A) has a melt flow rate (ISO 1133, 2.16 kg, 230°C) of 4.0 to 20.0 g/10min, preferably of 5 to 15 g/10min, more preferably of 6 to 12 g/10min;
    and
    b) 0.3 to 4.0 wt.-% based on the overall weight of the polyolefin composition of a compatibilizer (B)

    being a maleic anhydride-grafted styrene ethylene butylene styrene (SEBS) block copolymer having a melt volume rate (ISO 1133, 5.0 kg, 230°C) of 10 to 40 cm$^3$/10min and a maleic anhydride content of 0.5 to 15.0 wt.-% as determined by FT-IR spectroscopy,
    whereby the polyolefin composition has a tensile modulus of from 830 to 1200 MPa (ISO 527-1,2) when measured on an injection molded test specimen.

2.  The polyolefin composition according to claim 1, whereby the compatibilizer (B) has a maleic anhydride content of 8.0 to 10.0 wt.-% as determined by FT-IR spectroscopy.

3.  The polyolefin composition according to claim 1 or 2, whereby compatibilizer (B) has a content of characteristic signals corresponding to

    (v) polypropylene of 3.0 to 10.0 wt.-%; and
    (vi) polystyrene of 25.0 to 35.0 wt.-%; and
    (vii) butene derived polymer chain of 15.0 to 25.0 wt.-%, and
    (viii) ethylene derived polymer chain of 40.0 to 50.0 wt.-%;
    under the proviso that signals corresponding to (i), (ii), (iii) and (iv) amount to a total of 100 wt.-%,
    as determined by quantitative $^{13}$C{$^1$H} NMR spectroscopy, preferably as described in the experimental part.

4.  The polyolefin composition according to any of the preceding claims, whereby the compatibilizer (B) has a melt volume rate (ISO 1133, 5.0 kg, 230°C) of 15 to 35 cm$^3$/10min.

5.  The polyolefin composition according to any of the preceding claims, whereby blend (A) has a content of limonene A-11) as determined by using solid phase microextraction (HS-SPME-GC-MS) of from 1 ppm to 50 ppm, more preferably from 2 ppm to 50 ppm, most preferably from 3 ppm to 35 ppm.

6.  The polyolefin composition according to any of the preceding claims, whereby blend (A) has a content of fatty acids A-12) as determined by using solid phase microextraction (HS-SPME-GC-MS) of from 1 ppm to 150 ppm, more preferably from 2 ppm to 100 ppm, most preferably from 3 to 80 ppm.

17

7. The polyolefin composition according to any of the preceding claims having a melt flow rate (ISO 1133, 2.16 kg, 230°C) of 3.0 to 10.0 g/10min, preferably between 3.5 and 8.0 g/10min, more preferably between 4.0 and 7.0 g/10min, and still further preferably between 4.0 and 5.5 g/10 min.

8. The polyolefin composition according to any of the preceding claims, having a Charpy Impact Strength (ISO 179-1; 1eA, 23°C) of more than 6.5 kJ/m$^2$ and up to 10.0 kJ/m$^2$.

9. An article, comprising the polyolefin composition according to any one of claims 1 to 7.

10. A process for preparing the polyolefin composition according to any one of claims 1 to 7, comprising the steps of

    a) providing the blend (A) in an amount of 96.0 to 99.7 wt.-%, based on the overall weight of the polyolefin composition
    b) providing the compatibilizer (B) in an amount of 0.3 to 4.0 wt.-%, based on the overall weight of the polyolefin composition,
    c) melting and mixing blend (A) and the compatibilizer (B) in an extruder, and
    d) optionally pelletizing the obtained polyolefin composition.

11. A use of a compatibilizer (B) being a maleic anhydride-grafted styrene ethylene butylene styrene (SEBS) block copolymer having

    i) a melt volume rate (ISO 1133, 5.0 kg, 230°C) of 10 to 40 cm$^3$/10min,
    ii) a maleic anhydride content of 0.5 to 15.0 wt.-% as determined by FT-IR spectroscopy,
    for blending with a blend (A) comprising

    A-1) a content of isotactic polypropylene homopolymer of 30 to 70 wt.-%
    A-2) a content of polyethylene and ethylene containing copolymers of 20 to 50 wt.-%,
    A-3) 0.5 to 4.0 wt.-% polyamide-6,
    A-4) 0 to 3.0 wt.-% of stabilizers
    A-5) 0 to 5.0 wt.-% of polystyrene,
    A-6) 0 to 3.0 wt.-% talc,
    A-7) 0 to 3.0 wt.-% chalk,
    A-8) 0 to 1.0 wt.-% paper,
    A-9) 0 to 1.0 wt.-% wood,
    A-10) 0 to 0.5 wt.-% metal,
    A-11) 1 ppm to 100 ppm of limonene as determined by using solid phase microextraction (HS-SPME-GC-MS), and
    A-12) 1 ppm to 200 ppm total fatty acid content as determined by using solid phase microextraction (HS-SPME-GC-MS)
    wherein amounts of A-1) to A-12) are given with respect to the total weight of blend (A),

    wherein blend (A) is a recycled material, which is recovered from a waste plastic material derived from post-consumer and/or post-industrial waste; and
    wherein blend (A) has a melt flow rate (ISO 1133, 2.16 kg, 230°C) of 4 to 20.0 g/10min, preferably of 5 to 15 g/10min, more preferably of 6 to 12 g/10min to obtain an upgraded polyolefin composition with a tensile modulus of from 830 to 1200 MPa.

12. The use according to claim 10, wherein the upgraded polyolefin composition has a Charpy Impact Strength (ISO 179-1; 1eA, 23°C) of more than 6.5 kJ/m$^2$ and up to 10 kJ/m$^2$.

**Patentansprüche**

1. Polyolefinzusammensetzung, erhältlich durch Mischen

    a) 96,0 bis 99,7 Gew.-%, bezogen auf das Gesamtgewicht der Polyolefinzusammensetzung, eines Blends (A), umfassend

A-1) einen Gehalt an isotaktischem Polypropylen-Homopolymer von 30 bis 70 Gew.-%,

A-2) einen Gehalt an Polyethylen und ethylenhaltigen Copolymeren von 20 bis 50 Gew.-%,

A-3) 0,5 bis 4,0 Gew.-% Polyamid-6,

A-4) 0 bis 3,0 Gew.-% Stabilisatoren,

A-5) 0 bis 5,0 Gew.-% Polystyrol,

A-6) 0 bis 3,0 Gew.-% Talkum,

A-7) 0 bis 3,0 Gew.-% Kreide,

A-8) 0 bis 1,0 Gew.-% Papier,

A-9) 0 bis 1,0 Gew.-% Holz,

A-10) 0 bis 0,5 Gew.-% Metall,

A-11) 1 ppm bis 100 ppm Limonen, wie bestimmt unter Verwendung von Festphasenmikroextraktion (HS-SPME-GC-MS), und

A-12) 1 ppm bis 200 ppm Gesamtfettsäuregehalt, wie bestimmt unter Verwendung von Festphasenmikroextraktion (HS-SPME-GC-MS),

wobei die Mengen von A-1) bis A-12) in Bezug auf das Gesamtgewicht des Blends (A) angegeben sind,

wobei Blend (A) ein recyceltes Material ist, das aus einem Kunststoffabfallmaterial gewonnen wird, das aus Post-Verbraucher- und/oder Post-Industrie-Abfall stammt; und wobei Blend (A) eine Schmelzefließrate (ISO 1133, 2,16 kg, 230°C) von 4,0 bis 20,0 g/10 min, vorzugsweise von 5 bis 15 g/10 min, bevorzugter von 6 bis 12 g/10 min, aufweist; und

b) 0,3 bis 4,0 Gew.-%, bezogen auf das Gesamtgewicht der Polyolefinzusammensetzung, eines Verträglichkeitsvermittlers (B), der ein mit Maleinsäureanhydrid gepfropftes Styrol-Ethylen-Butylen-Styrol (SEBS)-Blockcopolymer mit einer Schmelzvolumenrate (ISO 1133, 5,0 kg, 230°C) von 10 bis 40 cm$^3$/10 min und einem Maleinsäureanhydrid-Gehalt von 0,5 bis 15,0 Gew.-%, wie durch FT-IR-Spektroskopie bestimmt, ist,

wobei die Polyolefinzusammensetzung einen Zugmodul von 830 bis 1200 MPa (ISO 527-1,2) aufweist, gemessen an einem spritzgegossenen Probekörper.

2. Polyolefinzusammensetzung nach Anspruch 1, wobei der Verträglichkeitsvermittler (B) einen Maleinsäureanhydrid-Gehalt von 8,0 bis 10,0 Gew.-%, wie durch FT-IR-Spektroskopie bestimmt, aufweist.

3. Polyolefinzusammensetzung nach Anspruch 1 oder 2, wobei der Verträglichkeitsvermittler (B) einen Gehalt an charakteristischen Signalen aufweist, die entsprechen

(v) Polypropylen von 3,0 bis 10,0 Gew.-%; und

(vi) Polystyrol von 25,0 bis 35,0 Gew.-%; und

(vii) eine von Buten abgeleitete Polymerkette von 15,0 bis 25,0 Gew.-%, und

(viii) eine von Ethylen abgeleitete Polymerkette von 40,0 bis 50,0 Gew.-%;

mit der Maßgabe, dass die Signale, die (i), (ii), (iii) und (iv) entsprechen, insgesamt 100 Gew.-% betragen, wie bestimmt durch quantitative $^{13}$C{$^1$H}-NMR-Spektroskopie, vorzugsweise wie im experimentellen Teil beschrieben.

4. Polyolefinzusammensetzung nach einem der vorangehenden Ansprüche, wobei der Verträglichkeitsvermittler (B) eine Schmelzvolumenrate (ISO 1133, 5,0 kg, 230°C) von 15 bis 35 cm$^3$/10 min aufweist.

5. Polyolefinzusammensetzung nach einem der vorangehenden Ansprüche, wobei das Blend (A) einen Gehalt an Limonen A-11), wie bestimmt unter Verwendung von Festphasenmikroextraktion (HS-SPME-GC-MS), von 1 ppm bis 50 ppm, bevorzugter von 2 ppm bis 50 ppm, besonders bevorzugt von 3 ppm bis 35 ppm aufweist.

6. Polyolefinzusammensetzung nach einem der vorangehenden Ansprüche, wobei Blend (A) einen Gehalt an Fettsäuren A-12), wie bestimmt unter Verwendung von Festphasenmikroextraktion (HS-SPME-GC-MS), von 1 ppm bis 150 ppm, bevorzugter von 2 ppm bis 100 ppm, besonders bevorzugt von 3 bis 80 ppm aufweist.

7. Polyolefinzusammensetzung nach einem der vorangehenden Ansprüche mit einer Schmelzefließrate (ISO 1133, 2,16 kg, 230°C) von 3,0 bis 10,0 g/10 min, vorzugsweise zwischen 3,5 und 8,0 g/10 min, bevorzugter zwischen 4,0 und 7,0 g/10 min und noch weiter bevorzugt zwischen 4,0 und 5,5 g/10 min.

**8.** Polyolefinzusammensetzung nach einem der vorangehenden Ansprüche mit einer Charpy-Schlagzähigkeit (ISO 179-1; 1eA, 23°C) von mehr als 6,5 kJ/m$^2$ und bis zu 10,0 kJ/m$^2$.

**9.** Gegenstand, umfassend die Polyolefinzusammensetzung nach einem der Ansprüche 1 bis 7.

**10.** Verfahren zur Herstellung der Polyolefinzusammensetzung nach einem der Ansprüche 1 bis 7, umfassend die Schritte

a) Bereitstellen des Blends (A) in einer Menge von 96,0 bis 99,7 Gew.-%, bezogen auf das Gesamtgewicht der Polyolefinzusammensetzung
b) Bereitstellen des Verträglichkeitsvermittlers (B) in einer Menge von 0,3 bis 4,0 Gew.-%, bezogen auf das Gesamtgewicht der Polyolefinzusammensetzung,
c) Schmelzen und Mischen des Blends (A) und des Verträglichkeitsvermittlers (B) in einem Extruder, und
d) gegebenenfalls das Pelletieren der erhaltenen Polyolefinzusammensetzung.

**11.** Verwendung eines Verträglichkeitsvermittlers (B), der ein mit Maleinsäureanhydrid gepfropftes Styrol-Ethylen-Butylen-Styrol (SEBS)-Blockcopolymer ist, mit

i) einer Schmelzvolumenrate (ISO 1133, 5,0 kg, 230°C) von 10 bis 40 cm$^3$/10 min,
ii) einem Maleinsäureanhydrid-Gehalt von 0,5 bis 15,0 Gew.-%, wie bestimmt durch FT-IR-Spektroskopie,

zum Mischen mit einem Blend (A), umfassend

A-1) einen Gehalt an isotaktischem Polypropylen-Homopolymer von 30 bis 70 Gew.-%
A-2) einen Gehalt an Polyethylen und ethylenhaltigen Copolymeren von 20 bis 50 Gew.-%,
A-3) 0,5 bis 4,0 Gew.-% Polyamid-6,
A-4) 0 bis 3,0 Gew.-% Stabilisatoren,
A-5) 0 bis 5,0 Gew.-% Polystyrol,
A-6) 0 bis 3,0 Gew.-% Talkum,
A-7) 0 bis 3,0 Gew.-% Kreide,
A-8) 0 bis 1,0 Gew.-% Papier,
A-9) 0 bis 1,0 Gew.-% Holz,
A-10) 0 bis 0,5 Gew.-% Metall,
A-11) 1 ppm bis 100 ppm Limonen, wie bestimmt unter Verwendung von Festphasenmikroextraktion (HS-SPME-GC-MS), und
A-12) 1 ppm bis 200 ppm Gesamtfettsäuregehalt, wie bestimmt unter Verwendung von Festphasenmikroextraktion (HS-SPME-GC-MS),
wobei die Mengen von A-1) bis A-12) in Bezug auf das Gesamtgewicht des Blends (A) angegeben sind,

wobei Blend (A) ein recyceltes Material ist, das aus einem Kunststoffabfallmaterial gewonnen wird, das aus Post-Verbraucher- und/oder Post-Industrie-Abfall stammt; und wobei Blend (A) eine Schmelzefließrate (ISO 1133, 2,16 kg, 230°C) von 4 bis 20,0 g/10 min, vorzugsweise von 5 bis 15 g/10 min, bevorzugter von 6 bis 12 g/10 min aufweist, um eine veredelte Polyolefinzusammensetzung mit einem Zugmodul von 830 bis 1200 MPa zu erhalten.

**12.** Verwendung nach Anspruch 10, wobei die veredelte Polyolefinzusammensetzung eine Charpy-Schlagzähigkeit (ISO 179-1; 1eA, 23°C) von mehr als 6,5 kJ/m$^2$ und bis zu 10 kJ/m$^2$ aufweist.

## Revendications

**1.** Composition de polyoléfine pouvant être obtenue en mélangeant

a) 96,0 à 99,7 % en poids sur la base du poids total de la composition de polyoléfine d'un mélange (A) comprenant

A-1) une teneur en homopolymère de polypropylène isotactique de 30 à 70 % en poids,
A-2) une teneur en polyéthylène et en copolymères contenant de l'éthylène de 20 à 50 % en poids,
A-3) 0,5 à 4,0 % en poids de polyamide-6,
A-4) 0 à 3,0 % en poids de stabilisants

A-5) 0 à 5,0 % en poids de polystyrène,

A-6) 0 à 3,0 % en poids de talc,

A-7) 0 à 3,0 % en poids de craie,

A-8) 0 à 1,0 % en poids de papier,

A-9) 0 à 1,0 % en poids de bois,

A-10) 0 à 0,5 % en poids de métal,

A-11) 1 ppm à 100 ppm de limonène, tel que déterminé par micro-extraction en phase solide (HS-SPME-GC-MS), et

A-12) une teneur totale en acides gras de 1 ppm à 200 ppm, telle que déterminée par micro-extraction en phase solide (HS-SPME-GC-MS),

dans laquelle les quantités de A-1) à A-12) sont données par rapport au poids total du mélange (A),

dans laquelle le mélange (A) est un matériau recyclé, qui est récupéré à partir d'un matériau plastique usagé dérivé de déchets post-consommation et/ou post-industriels ; et dans laquelle le mélange (A) présente un indice de fluidité à l'état fondu (ISO 1133, 2,16 kg, 230 °C) de 4,0 à 20,0 g/10 min, de préférence de 5 à 15 g/10 min, de manière davantage préférée de 6 à 12 g/10 min ;

et

b) 0,3 à 4,0 % en poids sur la base du poids total de la composition de polyoléfine d'un agent de compatibilité (B)

qui est un copolymère séquencé de styrène-éthylène-butylène-styrène (SEBS) greffé avec de l'anhydride maléique présentant un indice de fluidité en volume (ISO 1133, 5,0 kg, 230 °C) de 10 à 40 cm$^3$/10 min et une teneur en anhydride maléique de 0,5 à 15,0 % en poids telle que déterminée par spectroscopie FT-IR, moyennant quoi la composition de polyoléfine présente un module de traction de 830 à 1200 MPa (ISO 527-1,2) lorsqu'il est mesuré sur une éprouvette moulée par injection.

2. Composition de polyoléfine selon la revendication 1, moyennant quoi l'agent de compatibilité (B) présente une teneur en anhydride maléique de 8,0 à 10,0 % en poids, telle que déterminée par spectroscopie FT-IR.

3. Composition de polyoléfine selon la revendication 1 ou 2, moyennant quoi l'agent de compatibilité (B) présente un contenu de signaux caractéristiques correspondant à

(v) un polypropylène de 3,0 à 10,0 % en poids ; et

(vi) un polystyrène de 25,0 à 35,0 % en poids ; et

(vii) une chaîne polymère dérivée du butène de 15,0 à 25,0 % en poids, et

(viii) une chaîne polymère dérivée de l'éthylène de 40,0 à 50,0 % en poids ;

à condition que les signaux correspondant à (i), (ii), (iii) et (iv) représentent un total de 100 % en poids, tel que déterminé par spectroscopie RMN $^{13}$C{$^1$H} quantitative, de préférence comme décrit dans la partie expérimentale.

4. Composition de polyoléfine selon l'une des revendications précédentes, moyennant quoi l'agent de compatibilité (B) présente un indice de fluidité en volume (ISO 1133, 5,0 kg, 230 °C) de 15 à 35 cm$^3$/10 min.

5. Composition de polyoléfine selon l'une des revendications précédentes, moyennant quoi le mélange (A) présente une teneur en limonène A-11) telle que déterminée par micro-extraction en phase solide (HS-SPME-GC-MS) de 1 ppm à 50 ppm, de manière davantage préférée de 2 ppm à 50 ppm, de manière préférée entre toutes de 3 ppm à 35 ppm.

6. Composition de polyoléfine selon l'une des revendications précédentes, moyennant quoi le mélange (A) présente une teneur en acides gras A-12) telle que déterminée par micro-extraction en phase solide (HS-SPME-GC-MS) de 1 ppm à 150 ppm, de manière davantage préférée de 2 ppm à 100 ppm, de manière préférée entre toutes de 3 à 80 ppm.

7. Composition de polyoléfine selon l'une des revendications précédentes présentant un indice de fluidité à l'état fondu (ISO 1133, 2,16 kg, 230 °C) de 3,0 à 10,0 g/10 min, de préférence entre 3,5 et 8,0 g/10 min, de manière davantage préférée entre 4,0 et 7,0 g/10 min, et de manière encore plus préférée entre 4,0 et 5,5 g/10 min.

8. Composition de polyoléfine selon l'une des revendications précédentes, présentant une résistance aux chocs Charpy (ISO 179-1 ; 1eA, 23 °C) supérieure à 6,5 kJ/m$^2$ et allant jusqu'à 10,0 kJ/m$^2$.

**9.** Article comprenant la composition de polyoléfine selon l'une des revendications 1 à 7.

**10.** Procédé de préparation de la composition de polyoléfine selon l'une des revendications 1 à 7, comprenant les étapes consistant à

a) fournir le mélange (A) en une quantité de 96,0 à 99,7 % en poids, sur la base du poids total de la composition de polyoléfine
b) fournir l'agent de compatibilité (B) en une quantité de 0,3 à 4,0 % en poids, sur la base du poids total de la composition de polyoléfine,
c) faire fondre et mélanger le mélange (A) et l'agent de compatibilité (B) dans une extrudeuse, et
d) optionnellement former les granulés à partir de la composition de polyoléfine obtenue.

**11.** Utilisation d'un agent de compatibilité (B) qui est un copolymère séquencé de styrène-éthylène-butylène-styrène (SEBS) greffé avec de l'anhydride maléique présentant

i) un indice de fluidité en volume (ISO 1133, 5,0 kg, 230 °C) de 10 à 40 $cm^3/10$ min,
ii) une teneur en anhydride maléique de 0,5 à 15,0 % en poids telle que déterminée par spectroscopie FT-IR,

pour un mélange avec un mélange (A) comprenant
A-1) une teneur en homopolymère de polypropylène isotactique de 30 à 70 % en poids,
A-2) une teneur en polyéthylène et en copolymères contenant de l'éthylène de 20 à 50 % en poids,
A-3) 0,5 à 4,0 % en poids de polyamide-6,
A-4) 0 à 3,0 % en poids de stabilisants
A-5) 0 à 5,0 % en poids de polystyrène,
A-6) 0 à 3,0 % en poids de talc,
A-7) 0 à 3,0 % en poids de craie,
A-8) 0 à 1,0 % en poids de papier,
A-9) 0 à 1,0 % en poids de bois,
A-10) 0 à 0,5 % en poids de métal,
A-11) 1 ppm à 100 ppm de limonène, tel que déterminé par micro-extraction en phase solide (HS-SPME-GC-MS), et
A-12) une teneur totale en acides gras de 1 ppm à 200 ppm, telle que déterminée par micro-extraction en phase solide (HS-SPME-GC-MS),
dans laquelle les quantités de A-1) à A-12) sont données par rapport au poids total du mélange (A),
dans laquelle le mélange (A) est un matériau recyclé, qui est récupéré à partir d'un matériau plastique usagé dérivé de déchets post-consommation et/ou post-industriels ; et dans laquelle le mélange (A) présente un indice de fluidité à l'état fondu (ISO 1133, 2,16 kg, 230 °C) de 4 à 20,0 g/10 min, de préférence de 5 à 15 g/10 min, de manière davantage préférée de 6 à 12 g/10 min
pour obtenir une composition de polyoléfine valorisée présentant un module de traction allant de 830 à 1200 MPa.

**12.** Utilisation selon la revendication 10, dans laquelle la composition de polyoléfine valorisée présente une résistance aux chocs Charpy (ISO 179-1 ; 1eA, 23 °C) supérieure à 6,5 $kJ/m^2$ et allant jusqu'à 10 $kJ/m^2$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3165473 A

### Non-patent literature cited in the description

- *CHEMICAL ABSTRACTS,* 6683-19-8
- *CHEMICAL ABSTRACTS,* 31570-04-4
- *CHEMICAL ABSTRACTS,* 693- 36-7
- *CHEMICAL ABSTRACTS,* 11097-59-9
- *CHEMICAL ABSTRACTS,* 1592-23-0
- *CHEMICAL ABSTRACTS,* 557-05-1
- *CHEMICAL ABSTRACTS,* 60676-86-0
- *CHEMICAL ABSTRACTS,* 7631-86-9
- *CHEMICAL ABSTRACTS,* 112926-00-8
- *CHEMICAL ABSTRACTS,* 1318-74-7
- *CHEMICAL ABSTRACTS,* 1344-00-9
- *CHEMICAL ABSTRACTS,* 92704-41-1
- *CHEMICAL ABSTRACTS,* 1327-36-2
- *CHEMICAL ABSTRACTS,* 1344-95-2
- *CHEMICAL ABSTRACTS,* 1344-01-0
- *CHEMICAL ABSTRACTS,* 52829-07-9
- *CHEMICAL ABSTRACTS,* 1843-05-6
- *CHEMICAL ABSTRACTS,* 532-32-1
- *CHEMICAL ABSTRACTS,* 135861-56-2
- *CHEMICAL ABSTRACTS,* 97593-29-8
- *CHEMICAL ABSTRACTS,* 71786-60-2
- *CHEMICAL ABSTRACTS,* 204-393-1
- **BUSICO, V ; CIPULLO, R.** *Prog. Polym. Sci.,* 2001, vol. 26, 443
- **BUSICO, V. ; CIPULLO, R ; MONACO, G. ; VAC-ATELLO, M ; SEGRE, A.L.** *Macromolecules,* 1997, vol. 30, 6251
- **ZHOU, Z. ; KUEMMERLE, R ; QIU, X ; REDWINE, D ; CONG, R ; TAHA, A ; BAUGH, D. ; WINNIFORD, B.** *J. Mag. Reson.,* 2007, vol. 187, 225
- **BUSICO, V. ; CARBONNIERE, P. ; CIPULLO, R ; PELLECCHIA, R ; SEVERN, J. ; TALARICO, G.** *Macromol. Rapid Commun.,* 2007, vol. 28, 1128
- *CHEMICAL ABSTRACTS,* 128-37-0
- **J. RANDALL.** *Macromol. Sci., Rev. Macromol. Chem. Phys.,* 1989, vol. C29, 201
- **A. J. BRANDOLINI ; D. D. HILLS.** NMR Spectra of Polymers and Polymer Additives. Marcel Dekker Inc, 2000